# EUROPEAN PATENT SPECIFICATION

(11) **EP 2 119 287 B1**
(45) Date of publication and mention of the grant of the patent: **13.11.2013**
(21) Application number: 07711716.6
(22) Date of filing: 28.02.2007
(51) Int. Cl.: H04W 16/00, H04J 11/00

(54) **SELF CONFIGURING AND OPTIMISATION OF CELL NEIGHBOURS IN WIRELESS TELECOMMUNICATIONS NETWORKS**
SELBSTKONFIGURATION UND OPTIMIERUNG VON ZELLENNACHBARN IN DRAHTLOSEN TELEKOMMUNIKATIONSNETZEN
AUTOCONFIGURATION ET OPTIMISATION DE VOISINS DE CELLULE DANS DES RÉSEAUX DE TÉLÉCOMMUNICATION SANS FIL

(43) Date of publication of application: 18.11.2009
(60) Divisional application: 12159399.0
(73) Proprietor: Unwired Planet, LLC, Reno, NV 89501 (US)
(72) Inventor: MOE, Johan, S-590 17 Mantorp (SE); KALLIN, Harald, S-192 53 Sollentuna (SE)
(74) Representative: McCann, Heather Alison
(86) International application number: PCT/EP2007/001737
(87) International publication number: WO 2008/104196

(56) References cited:
- EP-A- 1 720 373
- WO-A-96/38014
- WO-A-2005/032190
- WO-A1-99/27736
- GB-A- 2 331 892
- US-A1- 2006 234 713

## Description

The present invention relates to self configuring and optimisation of cell neighbours in wireless telecommunications networks.

### BACKGROUND OF THE INVENTION

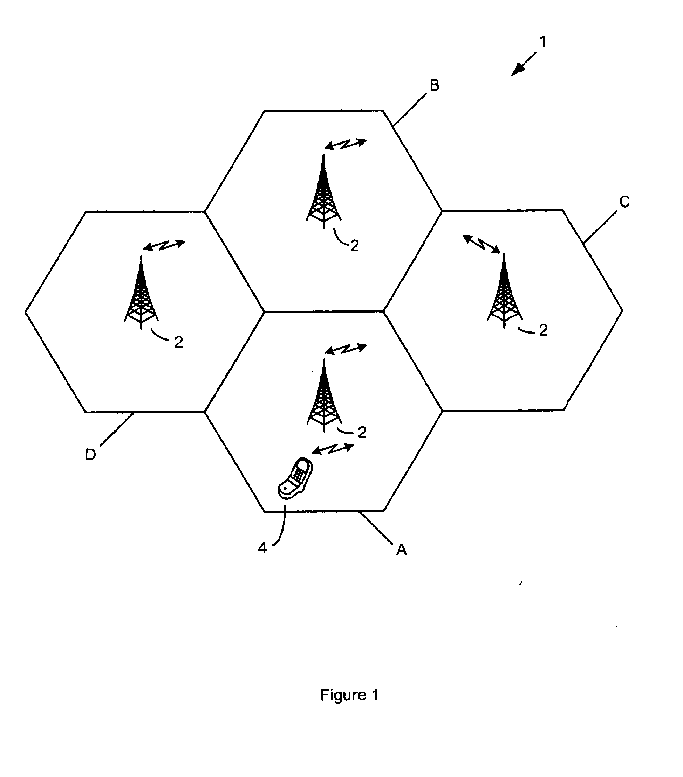

Figure 1 of the accompanying drawings illustrates a wireless telecommunications network, which defines a number of communication cells (A, B, C, D) each of which is served by a radio base station 2. Each communication cell covers a geographical area, and by combining a number of cells a wide area can be covered. A mobile terminal 4 is illustrated communicating in cell A, and is able to move around the system 1.

A base station 2 contains a number of receivers and transmitters to give radio coverage for one or more cells. Each base station 2 is connected to network "backbone", or core network infrastructure (not shown), which enables communications between base stations and other networks. The example system of Figure 1 shows one base station per cell.

An important concept in such a network is the cell and its neighbours. During a call a mobile terminal 4 typically moves around among the cells; moving from one cell to one of its neighbours, repeatedly. A list of the known neighbours, the so called "neighbour cell set", is important both for the network 1 and for the mobile terminal 4 to enable reliable handover between cells. The network 1 can store information relating to a neighbour set for each mobile terminal. The neighbour set is used for evaluation and handover of a mobile terminal from one cell to another as the mobile terminal crosses a cell boundary. It will be readily appreciated that the cell boundaries are not sharply defined, but will in practice be somewhat blurred as the range of the base stations will overlap with one another.

In existing systems, the mobile terminal 4 detect and measure cell operating parameters for neighbouring cells by receiving signals from the neigbourhood. The measured operating parameters are typically a physical layer identifier such as a scramble code which is non uniquely assigned to the cell, signal strength, signal quality and timing information. The mobile terminal measures the operating parameters of each neighbour cell and reports those back to the network 1. When the quality of a neighbour cell is considered better than the current serving cell, a handover from the serving cell to the chosen neighbour cell is executed by the network. The neighbour cell then becomes the serving cell for the mobile terminal.

Typically in a WCDMA (wideband code division multiple access) system, the mobile terminal detects Common Pilot Channel (CPICH) transmissions from surrounding cells, in order to determine id (scamble code) and timing information.

When the mobile reports the neighbour cell signal quality measurements to the network, the cells' respective identities become important. Currently, cell identities (scramble code) are reused for more than one cell. The reuse of identities means that cells may be confused with one other, since the serving cell may have neighbour cells having the same identity information.

Document WO96/38014 is an example were cell identification codes that are non-unique are broadcast in the cells and serves to identify the cell for example when neighbour cell measurements are performed by a mobile terminal. Despite the fact that WO96/38014 states that the cell identity is unique per cell, it can be understood that the cell identity is non-unique. The name of the cell identity used in WO96/38014 is BSIC (Base Station Identity Code) and that is standardized for the GSM system. The system disclosed in WO96/38014 seems to correspond to the GSM.

According to the GSM standard the BSIC is composed of a 3-bit Network Color Code (NCC) and a 3-bit Base station Color Code (BCC), and with a total of 6 binary bits 64 unique codes can be produced. Since a cellular network comprises many more cells that 64 it is understood that the BSIC codes must be reduced. GSM is a TDMA system and neighboring cells are assigned different sets of frequency channels. A GSM terminal is instructed on which channels it shall make neighbor cell measurements and this reduces the risk that a measurement that is reported with its BSIC is mistaken to be made on another cell than what is actually measured. It is important to make correct identification of cells reported by the mobile terminals, otherwise a handover may be initiated to another cell than the best suited.

Since the cells' physical layer identifiers are non-unique, populating and maintaining the neighbour cell sets can never be fully automatic. Human efforts are needed to resolve conflicts where the serving cell has multiple neighbours using the same non-unique identifier. It is cumbersome to plan the network such that a cell measured and reported by a mobile terminal can not be mistaken to be another cell.

### SUMMARY OF THE PRESENT INVENTION

The present invention aims to reduce the cost of planning and maintaining neighbour cell sets. It is based on an extra step that is made where mobile terminals are required to make an additional effort to identify uniquely neighbouring cells in the radio network and that the identities are reported from the mobile terminal to the network. Embodiments of the present invention are intended to reduce manual intervention. The method can be implemented as part of an operation support system and base station or only in the RBS. The method is valid for wireless telecommunications technologies such as GSM, WCDMA and LTE.

One embodiment relates to a method for a mobile terminal, and that comprises, the mobile terminal communicating with a radio base station which serves a first communications cell, determining an operating parameter of a second cell detecting non-unique identifier information of the second cell and reporting the operating parameter and the non-unique identifier information to the radio base station. The mobile terminal further receives an instruction from the radio base station and detects unique cell identifier information upon receipt of the instruction and reports the unique cell identifier information to the radio base station.

Another embodiment relates to a mobile terminal for use in a wireless telecommunications system which defines a plurality of cells, and the terminal also comprises a controller that is operable to control the terminal to performed the steps of the method described in the previous paragraph.

Yet another embodiment relates to a method for controlling resources in a wireless telecommunications system which defines a plurality of communications cells, and which method comprises communicating with a mobile terminal operating in a first communications cell. Non-unique identifier information and parameter information relating to at least one operating parameter for a second communication cell is received from the mobile terminal. A neighbour cell list is defined that includes the second communication cell. It is further determined whether unique cell identity information is required for the second communications cell, and if it is, an instruction is transmitted to the mobile terminal. The unique cell identifier information is received from the mobile terminal and the handover candidate cell list for the mobile terminal is defined.

A further embodiment relates to a network that comprises network resources that are operable to perform the method described in previous section.

### BRIEF DESCRIPTION OF THE DRAWINGS

Figure 1 illustrates a cellular wireless telecommunications network;
Figure 2 illustrates a mobile terminal and a base station; and
Figure 3 to 6 illustrate steps in a method embodying one aspect of the present invention.

### DETAILED DESCRIPTION OF THE PREFERRED EMBODIMENTS

In order to address the shortcomings of prior solutions, the present invention provides a method and architecture for maintaining neighbour cell sets within a mobile cellular network.

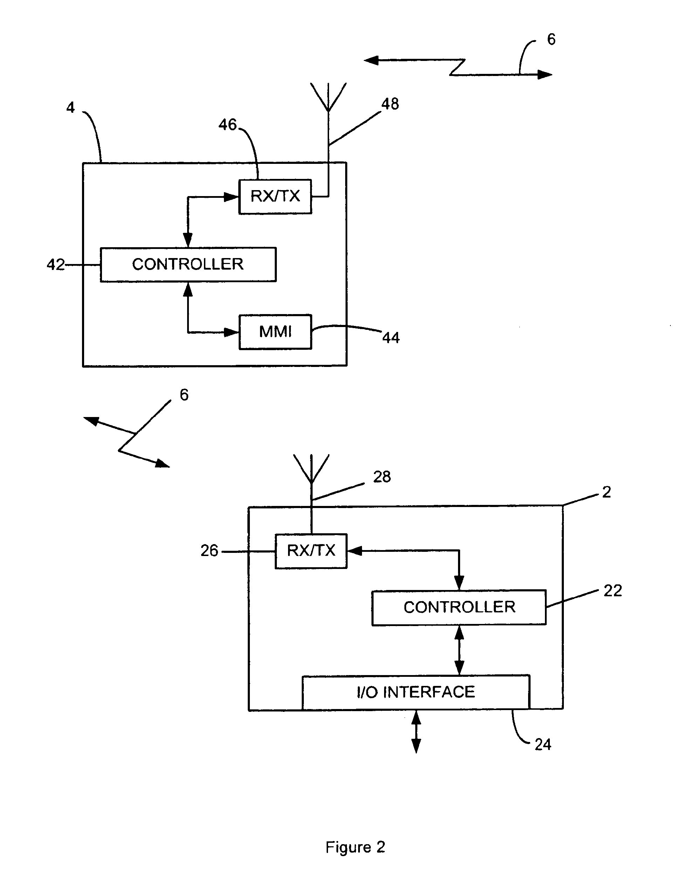

Figure 2 is a schematic diagram showing a mobile terminal 4 and a base station 2 which communicate via an air interface 6. The base station 2 includes a controller 22, input/output (I/O) interface 24, a radio transceiver 26 and an antenna 28. The controller communicates with mobile terminals via the transceiver 26 and antenna 28 over the air interface 6. The controller 22 also communicates with the rest of the telecommunications network via the I/O interface 24.

The mobile terminal 4 comprises a controller 42, a man machine interface (MMI) 44, a radio transceiver 46, and an antenna 48. The controller of the mobile terminal 4 serves to control communications with the base station 2 via the transceiver 46 and antenna 48, over the air interface 6. Interactions with the user of the device take place using the man machine interface 44, which can include a key pad, microphone, loudspeaker and display device, for example. The mobile terminal may also be communication equipment with only a machine-machine interface. These aspects of the base station and mobile terminal are designed to operate in accordance with usual practice.

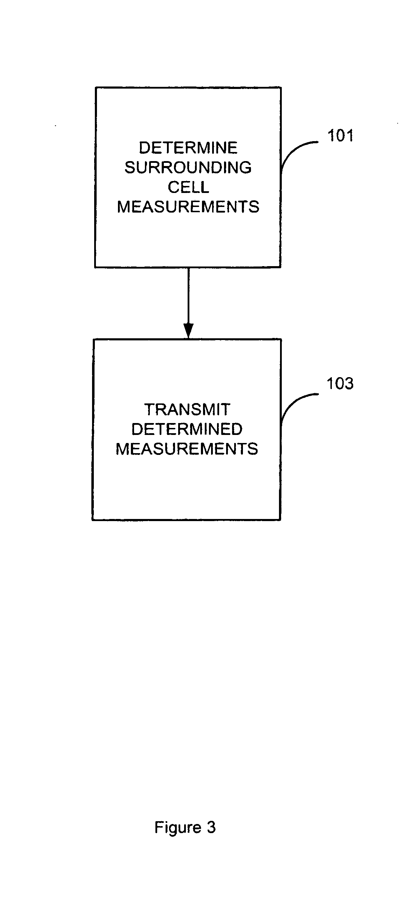

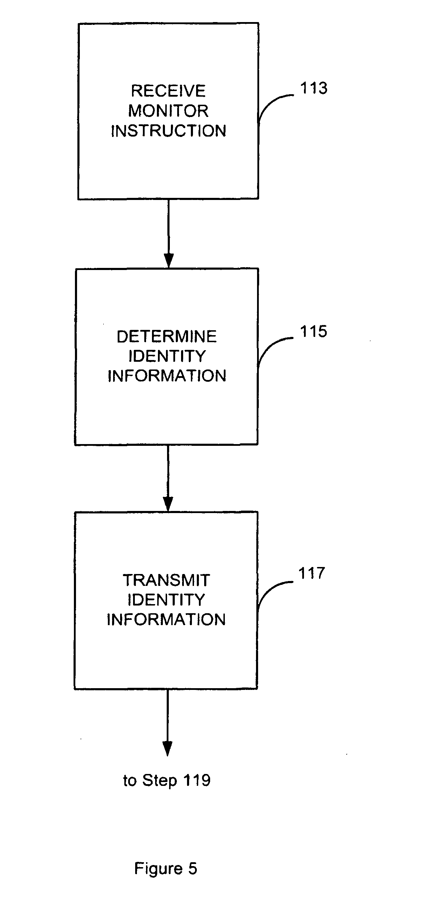

However, base stations 2 and mobile terminals 4 which operate in accordance with the present invention are adapted to carry out the method of the invention as described below with reference to Figures 3 to 6. It will be appreciated that the various functional units can be provided by the controller, or by other specific units in the devices, or network 1.

A method embodying the present invention will now be described with reference to the flowcharts of Figures 3 to 6 as well as Figure 2. Figure 3 illustrates steps to be carried out by the mobile terminal 4. The first step of the method is step 101 in which the mobile terminal 4 determines parameter measurements for surrounding cells. Next, the mobile terminal reports the measurement information to the base station (step 103).

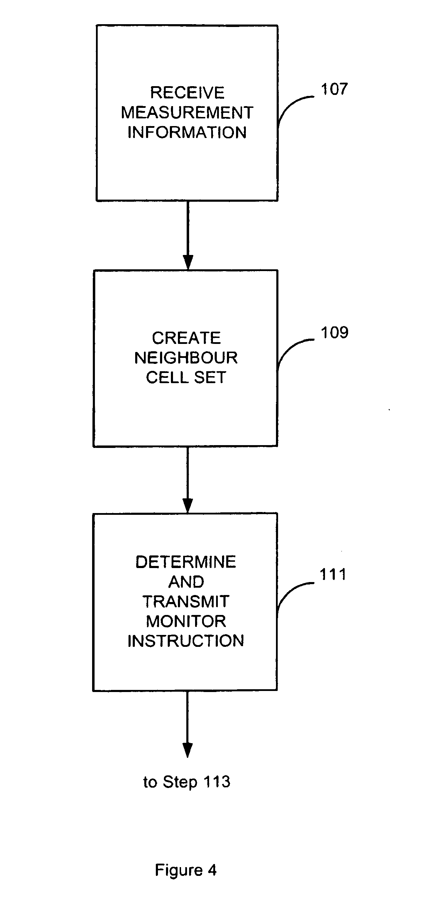

Turning to Figure 4, the base station 2 receives the measurement information from the mobile terminal 4 (step 107), with each measurement information tied to the (non-unique) cell identities that the mobile terminal 4 have detected. If the information from the mobile terminal 4 contains measurements from a cell identity that previously is not a member of the neighbouring cell set, the mobile terminal 4 may be requested to also retrieve the unique cell identity (step 113). The unique cell identity is transmitted from base stations at a much less frequent interval than the physical layer identity. In order to receive and decode this information, the mobile terminal 4 may have to momentarily interrupt its communication with the serving cell. When the unique cell identity has been retrieved (step 115), this information is transmitted to the serving cell (step 117). When the serving cell receives the unique cell identity (step 119) it may now add the newly discovered neighbour cell to its neighbour cell set (step 121) and establish a transport connection to it. It is obvious that the cellular network may want some filtering of the measurement data including several mobile terminals to identify the new neighbour, thereby avoiding adding a distant cell that was detected under exceptional propagation conditions, for example from a mobile terminal 4 located in an aircraft.

The mobile terminal 4, in another example, may provide the unique identity information to the base station 2, without the need to receive an instruction to do so from the base station 2.

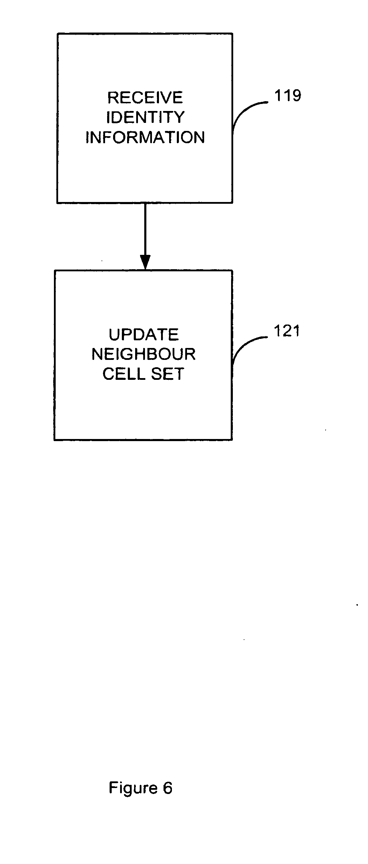

Turning to Figure 6, the base station 2 receives the unique identity information (step 119), and then updates the neighbour cell set. In this way, the neighbour cell set includes unique identity information for those cells which are to be considered as neighbour cells which are candidate cells for handover of the mobile terminal 4.

Making use of unique cell identifiers (UCID) means that there is unambiguous information relating to the identity of the neighbour cells, and so confusion regarding those neighbouring cells is removed. Using the fast and low-resource demanding non-unique cell identity for most of the measurements, facilitates efficient resource usage within mobile terminals 4 and rapid handover to the neighbour cells. The mobile terminal 4 is only requested to retrieve the more cumbersome unique cell identifier when a new neighbour is detected, or when an audit of the relation between the non-unique and unique cell identity seems appropriate.

All cell relations can be continuously evaluated. Inputs to that evaluation are mobile terminal reports and events, network events and operator input. The result of the evaluation is that the cell (or cell relations) will retain different properties. This can also be seen as the cell (relation) being in different states.

The major advantage of embodiments of the present invention is that it removes the need for manual involvement within the process of maintaining neighbour sets. The operator can decide to fully neglect the concept of neighbours and let the system take care of the neighbour cell definitions.

Cell lookup maps the unique cell identity (UCID) to the address of the realising node of that cell. For example, in LTE, this can be an ordinary DNS, mapping the cell identity to an IP address. The IP address in turn points to the RBS realising the cell.

## Claims

1. A method for operating a mobile terminal in a wireless telecommunications system which defines a plurality of communications cells, the method comprising:
communicating with a radio base station which serves a first communications cell;
determining (101) at least one operating parameter for a second communications cell;
detecting non-unique identifier information for the second communications cell;
reporting (103) parameter information relating to the or each operating parameter for the second communications cell and reporting the detected non-unique identifier information to the radio base station of the first communications cell,
wherein the method further comprises:
receiving (113) an instruction from the radio base station of the first communications cell;
detecting (115) unique cell identifier information for the second communications cell upon receipt of the instruction; and
reporting (117) the detected unique cell identifier information for the second communications cell to the radio base station of the first communications cell.

2. A method as claimed in claim 1, wherein the at least one operating parameter comprising one or more of an encoding code, a signal strength measurement, a signal quality measurements, and timing information.

3. A method as claimed in claim 1, wherein further comprising receiving a list of communications cells from the radio base station of the first communications cell, the list including the second communications cell and a plurality of further communications cells.

4. A method as claimed in any one of the preceding claims, wherein the second communications cell neighbours the first communication cell.

5. A method as claimed in any one of the preceding claims, further comprising
detecting non-unique cell identifier Information for a plurality of further communications cells;

6. A mobile terminal (4) for use in a wireless telecommunications system which defines a plurality of communications cells, the terminal comprising means for carrying out the steps of a method as claimed in any one of the preceding claims.

7. A mobile terminal (4) as claimed in claim 6 comprising a controller for communicating with a radio base station which serves a first communications cell, wherein the controller is operable to:
determine (101) at least one operating parameter for a second communications cell;
detect non-unique identifier information for the second communications cell;
report (103) parameter information relating to the or each operating parameter for the second communications cell and report the non-unique identifier information to the radio base station of the first communications cell;
receive (113) an instruction from the radio base station of the first communications cell if the detected non-unique identifier information is not included in a neighbouring cell set of the first communications cell;
detect (115) unique cell identifier information for the second communications cell upon receipt of the instruction; and
report (117) the detected unique cell identifier information for the second communications cell to the radio base station of the first communications cell.

8. A mobile terminal (4) as claimed in claim 7, wherein the at least one operating parameter comprising one or more of a scramble code, a signal strength measurement, a signal quality measurement, and timing information.

9. A mobile terminal (4) as claimed in claim 7, wherein the controller is operable to receive a list of communications cells from the radio base station of the first communications cell, the list including the second communications cell and a plurality of further communications cells.

10. A mobile terminal (4) as claimed in any one of claims 7 to 9, wherein the second communications cell neighbours the first communication cell.

11. A mobile terminal (4) as claimed in any one of claims 7 to 10, wherein the controller is operable to
detect non-unique cell identifier information for a plurality of further communications cells;
report parameter information relating to the or each operating parameter for the plurality of further communications cells and report the non-unique identifier information to the radio base station of the first communications cell;
receive an instruction from the radio base station of the first communications cell if the detected non-unique identifier information is not included in a neighbouring cell set of the first communications cell;
detect unique cell identifier information for the plurality of further communications cells upon receipt of the instruction; and
report the detected unique cell identifier information for the plurality of further communications cells to the radio base station of the first communications cell.

12. A method for controlling resources in a wireless telecommunications system which defines a plurality of communications cells, the method comprising:
communicating with a mobile terminal operating in a first communications cell;
receiving (107) non-unique identifier information and parameter information relating to at least one operating parameter for a second communications cell from the mobile terminal; and
defining (109) a neighbour cell list for the mobile terminal, the neighbour cell list including the second communications cell,
wherein the method further comprises:
determining (111), from the non-unique identifier information, whether unique cell identity information is required for the second communications cell; and, if such unique identity information is required:
transmitting (111) an instruction to the mobile terminal;
receiving (119) unique cell identifier information relating to the second communications cell from the mobile terminal; and
defining (121) a handover candidate cell list for the mobile terminal, the handover candidate cell list including the second communications cell.

13. A method as claimed in claim 12, wherein the at least one operating parameter comprising one or more of a scramble code, a signal strength measurement, a signal quality measurement, and timing information.

14. A method as claimed In claim 12 or 14, wherein the second communications cell neighbours the first communication cell.

15. A method as claimed in any one of claims 12 to 14, further comprising
receiving non-unique cell identifier information for a plurality of further communications cells from the mobile terminal;
determining, from the non-unique identifier information, whether unique cell identity information is required for the plurality of further communications cells; and, if such unique identity information is required:
transmitting an instruction to the mobile terminal;
receiving unique cell identifier information relating to the plurality of further communications cells from the mobile terminal; and
defining a handover candidate cell list for the mobile terminal, the handover candidate cell list including the plurality of further communications cells.

16. A wireless telecommunications network which defines a plurality of communications cells, the network comprising network resources operable to:
communicate with a mobile terminal operating in a first communications cell;
receive (107) non-unique identifier information and parameter information relating to at least one operating parameter for the second communications cell from the mobile terminal;
define (109) a neighbour cell list for the mobile terminal, the neighbour cell list including the second communications cell;
determine (111), from the non-unique identifier information, whether unique cell identity information is required for the second communications cell; and, if such unique identity information is required:
transmit (111) an instruction to the mobile terminal;
receive (119) unique cell identifier information relating to the second communications cell from the mobile terminal; and
define (121) a handover candidate cell list for the mobile terminal, the handover candidate cell list including the second communications cell.

17. A network as claimed in claim 16, wherein the at least one operating parameter comprises one or more of a scramble code, a signal strength measurement, a signal quality measurement, and timing information.

18. A network as claimed in claim 16 or 17, wherein the second communications cell neighbours the first communication cell.

19. A network as claimed in any one of claims 16 to 17, wherein the network resources are operable to:
receive non-unique cell identifier information for a plurality of further communications cells from the mobile terminal;
determine, from the non-unique identifier information, whether unique cell identity information is required for the plurality of further communications cells; and, if such unique identity information is required:
transmit an instruction to the mobile terminal;
receive unique cell identifier information relating to the plurality of further communications cells from the mobile terminal; and
define a handover candidate cell list for the mobile terminal, the handover candidate cell list including the plurality of further communications cells.

20. A network as claimed in any one of claim 16 to 19, wherein the network resources are provided by a radio base station.

21. A wireless telecommunications network as claimed in any one of claims 16 to 20, further comprising a mobile terminal as claimed in any one of claims 12 to 15.

## Patentansprüche

1. Verfahren zum Betreiben eines mobilen Endgeräts in einem drahtlosen Telekommunikationssystem, das eine Mehrzahl von Kommunikationszellen definiert, wobei das Verfahren Folgendes umfasst:
Kommunizieren mit einer Funkbasisstation, die eine erste Kommunikationszelle versorgt;
Bestimmen (101) mindestens eines Betriebsparameters für eine zweite Kommunikationszelle;
Erkennen nichteindeutiger Kennungsinformationen für die zweite Kommunikationszelle;
Melden (103) von Parameterinformationen bezüglich des oder jedes Betriebsparameters für die zweite Kommunikationszelle und Melden der erkannten nichteindeutigen Kennungsinformationen an die Funkbasisstation der ersten Kommunikationszelle,
wobei das Verfahren weiterhin Folgendes umfasst:
Empfangen (113) einer Anweisung von der Funkbasisstation der ersten Kommunikationszelle;
Erkennen (115) eindeutiger Zellenkennungsinformationen für die zweite Kommunikationszelle nach Empfang der Anweisung; und
Melden (117) der erkannten eindeutigen Zellenkennungsinformationen für die zweite Kommunikationszelle an die Funkbasisstation der ersten Kommunikationszelle.

2. Verfahren nach Anspruch 1, wobei der mindestens eine Betriebsparameter einen Codierungscode, eine Signalstärkemessung, eine Signalgütemessung und/oder Taktinformationen umfasst.

3. Verfahren nach Anspruch 1, weiterhin umfassend Empfangen einer Liste von Kommunikationszellen von der Funkbasisstation der ersten Kommunikationszelle, wobei die Liste die zweite Kommunikationszelle und eine Mehrzahl weiterer Kommunikationszellen enthält.

4. Verfahren nach einem beliebigen der vorhergehenden Ansprüche, wobei die zweite Kommunikationszelle der ersten Kommunikationszelle benachbart ist.

5. Verfahren nach einem beliebigen der vorhergehenden Ansprüche, weiterhin umfassend Erkennen nichteindeutiger Zellenkennungsinformationen für eine Mehrzahl weiterer Kommunikationszellen.

6. Mobiles Endgerät (4) zur Verwendung in einem drahtlosen Telekommunikationssystem, das eine Mehrzahl von Kommunikationszellen definiert, wobei das Endgerät Mittel zum Ausführen der Schritte eines Verfahrens nach einem beliebigen der vorhergehenden Ansprüche umfasst.

7. Mobiles Endgerät (4) nach Anspruch 6, umfassend eine Steuerung zum Kommunizieren mit einer Funkbasisstation, die eine erste Kommunikationszelle versorgt, wobei die Steuerung betreibbar ist zum:
Bestimmen (101) mindestens eines Betriebsparameters für eine zweite Kommunikationszelle;
Erkennen nichteindeutiger Kennungsinformationen für die zweite Kommunikationszelle;
Melden (103) von Parameterinformationen bezüglich des oder jedes Betriebsparameters für die zweite Kommunikationszelle und Melden der nichteindeutigen Kennungsinformationen an die Funkbasisstation der ersten Kommunikationszelle;
Empfangen (113) einer Anweisung von der Funkbasisstation der ersten Kommunikationszelle, wenn die erkannten nichteindeutigen Kennungsinformationen nicht in einer Nachbarzellenmenge der ersten Kommunikationszelle enthalten sind;
Erkennen (115) von eindeutigen Zellenkennungsinformationen für die zweite Kommunikationszelle nach Empfang der Anweisung, und
Melden (117) der erkannten eindeutigen Zellenkennungsinformationen für die zweite Kommunikationszelle an die Funkbasisstation der ersten Kommunikationszelle.

8. Mobiles Endgerät (4) nach Anspruch 7, wobei der mindestens eine Betriebsparameter einen Verwürfelungscode, eine Signalstärkemessung, eine Signalgütemessung und/oder Taktinformationen umfasst.

9. Mobiles Endgerät (4) nach Anspruch 7, wobei die Steuerung zum Empfangen einer Liste von Kommunikationszellen von der Funkbasisstation der ersten Kommunikationszelle betreibbar ist, wobei die Liste die zweite Kommunikationszelle und eine Mehrzahl weiterer Kommunikationszellen enthält.

10. Mobiles Endgerät (4) nach einem beliebigen der Ansprüche 7 bis 9, wobei die zweite Kommunikationszelle der ersten Kommunikationszelle benachbart ist.

11. Mobiles Endgerät (4) nach einem beliebigen der Ansprüche 7 bis 10, wobei die Steuerung betreibbar ist zum
Erkennen nichteindeutiger Zellenkennungsinformationen für eine Mehrzahl weiterer Kommunikationszellen;
Melden von Parameterinformationen bezüglich des oder jedes Betriebsparameters für die Mehrzahl weiterer Kommunikationszellen und Melden der nichteindeutigen Kennungsinformationen an die Funkbasisstation der ersten Kommunikationszelle;
Empfangen einer Anweisung von der Funkbasisstation der ersten Kommunikationszelle, wenn die erkannten nichteindeutigen Kennungsinformationen nicht in einer Nachbarzellenmenge der ersten Kommunikationszelle enthalten sind;
Erkennen eindeutiger Zellenkennungsinformationen für die Mehrzahl weiterer Kommunikationszellen nach Empfang der Anweisung; und
Melden der erkannten eindeutigen Zellenkennungsinformationen für die Mehrzahl weiterer Kommunikationszellen an die Funkbasisstation der ersten Kommunikationszelle.

12. Verfahren zum Regeln der Ressourcen in einem drahtlosen Telekommunikationssystem, das eine Mehrzahl von Kommunikationszonen definiert, wobei das Verfahren Folgendes umfasst:
Kommunizieren mit einem in einer ersten Kommunikationszelle betriebenen mobilen Endgerät;
Empfangen (107) nichteindeutiger Kennungsinformationen und Parameterinformationen bezüglich des mindestens einen Betriebsparameters für eine zweite Kommunikationszelle von dem mobilen Endgerät; und
Definieren (109) einer Nachbarzellenliste für das mobile Endgerät, wobei die Nachbarzellenliste die zweite Kommunikationszelle enthält,
wobei das Verfahren weiterhin Folgendes umfasst:
Bestimmen (111) aus den nichteindeutigen Kennungsinformationen, ob eindeutige Zellenerkennungsinformationen für die zweite Kommunikationszelle erforderlich sind, und wenn solche eindeutigen Kennungsinformationen erforderlich sind:
Übertragen (111) einer Anweisung an das mobile Endgerät;
Empfangen (119) eindeutiger Zellenkennungsinformationen bezüglich der zweiten Kommunikationszelle von dem mobilen Endgerät; und
Definieren (121) einer für das Handover infrage kommenden Zellenliste für das mobile Endgerät, wobei die für das Handover infrage kommende Zellenliste die zweite Kommunikationszelle enthält.

13. Verfahren nach Anspruch 12, wobei der mindestens eine Betriebsparameter einen Verwürfelungscode, eine Signalstärkemessung, eine Signalgütemessung und/oder Taktinformationen umfasst.

14. Verfahren nach Anspruch 12 oder 14, wobei die zweite Kommunikationszelle der ersten Kommunikationszelle benachbart ist.

15. Verfahren nach einem beliebigen der Ansprüche 12 bis 14, weiterhin umfassend
Empfangen nichteindeutiger Zellenkennungsinformationen für eine Mehrzahl weiterer Kommunikationszellen von dem mobilen Endgerät;
Bestimmen aus den nichteindeutigen Kennungsinformationen, ob eindeutige Zellenkennungsinformationen für die Mehrzahl weiterer Kommunikationszellen erforderlich sind, und wenn solche eindeutigen Kennungsinformationen erforderlich sind:
Übertragen einer Anweisung an das mobile Endgerät;
Empfangen eindeutiger Zellenkennungsinformationen bezüglich der Mehrzahl weiterer Kommunikationszellen von dem mobilen Endgerät; und
Definieren einer für das Handover infrage kommenden Zellenliste für das mobile Endgerät, wobei die für das Handover infrage kommende Zellenliste die Mehrzahl weiterer Kommunikationszellen enthält.

16. Drahtloses Telekommunikationsnetz, das eine Mehrzahl von Kommunikationszellen definiert, wobei das Netz Netzressourcen umfasst, die betreibbar sind zum:
Kommunizieren mit einem in einer ersten Kommunikationszelle betriebenen mobilen Endgerät;
Empfangen (107) nichteindeutiger Kennungsinformationen und Parameterinformationen bezüglich mindestens eines Betriebsparameters für die zweite Kommunikationszelle von dem mobilen Endgerät;
Definieren (109) einer Nachbarzellenliste für das mobile Endgerät, wobei die Nachbarzellenliste die zweite Kommunikationszelle enthält;
Bestimmen (111) aus den nichteindeutigen Kennungsinformationen, ob eindeutige Zellenkennungsinformationen für die zweite Kommunikationszelle erforderlich sind, und wenn solche eindeutigen Kennungsinformationen erforderlich sind:
Übertragen (111) einer Anweisung an das mobile Endgerät;
Empfangen (119) eindeutiger Zellenkennungsinformationen bezüglich der zweiten Kommunikationszelle von dem mobilen Endgerät; und
Definieren (121) einer für das Handover infrage kommenden Zellenliste für das mobile Endgerät, wobei die für das Handover infrage kommende Zellenliste die zweite Kommunikationszelle enthält.

17. Netz nach Anspruch 16, wobei der mindestens eine Betriebsparameter einen Verwürfelungscode, eine Signalstärkemessung, eine Signalgütemessung und/oder Taktinformationen umfasst.

18. Netz nach Anspruch 16 oder 17, wobei die zweite Kommunikationszelle der ersten Kommunikationszelle benachbart ist.

19. Netz nach einem beliebigen der Ansprüche 16 bis 17, wobei die Netzressourcen betreibbar sind zum:
Empfangen nichteindeutiger Zellenkennungsinformationen für eine Mehrzahl weiterer Kommunikationszellen von dem mobilen Endgerät;
Bestimmen aus den nichteindeutigen Kennungsinformationen, ob eindeutige Zellenkennungsinformationen für die Mehrzahl weiterer Kommunikationszellen erforderlich sind, und wenn solche eindeutigen Kennungsinformationen erforderlich sind:
Übertragen einer Anweisung an das mobile Endgerät;
Empfangen eindeutiger Zellenkennungsinformationen bezüglich der Mehrzahl weiterer Kommunikationszellen von dem mobilen Endgerät; und
Definieren einer für das Handover infrage kommenden Zellenliste für das mobile Endgerät, wobei die für das Handover infrage kommende Zellenliste die Mehrzahl weiterer Kommunikationszellen enthält.

20. Netz nach einem beliebigen der Ansprüche 16 bis 19, wobei die Netzressourcen durch eine Funkbasisstation bereitgestellt werden.

21. Drahtloses Telekommunikationsnetz nach einem beliebigen der Ansprüche 16 bis 20, weiterhin umfassend ein mobiles Endgerät nach einem beliebigen der Ansprüche 12 bis 15.

## Revendications

1. Procédé pour faire fonctionner un terminal mobile dans un système de télécommunication sans fil qui définit une pluralité de cellules de communication, le procédé comprenant :
la communication avec une station de base radio qui dessert une première cellule de communication ;
la détermination (101) d'au moins un paramètre de fonctionnement pour une deuxième cellule de communication ;
la détection d'informations d'identificateur non unique pour la deuxième cellule de communication ;
le rapport (103) d'informations de paramètre concernant le ou chaque paramètre de fonctionnement pour la deuxième cellule de communication et le rapport des informations d'identificateur non unique détectées à la station de base radio de la première cellule de communication,
dans lequel le procédé comprend en outre :
la réception (113) d'une instruction en provenance de la station de base radio de la première cellule de communication ;
la détection (115) d'informations d'identificateur de cellule unique pour la deuxième cellule de communication après la réception de l'instruction ; et
le rapport (117) des informations d'identificateur de cellule unique détectées pour la deuxième cellule de communication à la station de base radio de la première cellule de communication.

2. Procédé selon la revendication 1, dans lequel l'au moins un paramètre de fonctionnement comprend un ou plusieurs parmi un code de codage, une mesure de puissance du signal, une mesure de qualité du signal et des informations de synchronisation.

3. Procédé selon la revendication 1, dans lequel il comprend en outre la réception d'une liste de cellules de communication en provenance de la station de base radio de la première cellule de communication, la liste comprenant la deuxième cellule de communication et une pluralité d'autres cellules de communication.

4. Procédé selon l'une quelconque des revendications précédentes, dans lequel la deuxième cellule de communication est voisine de la première cellule de communication.

5. Procédé selon l'une quelconque des revendications précédentes, comprenant en outre
la détection d'informations d'identificateur de cellule non unique pour une pluralité d'autres cellules de communication.

6. Terminal mobile (4) pour l'utilisation dans un système de télécommunication sans fil qui définit une pluralité de cellules de communication, le terminal comprenant des moyens pour exécuter les étapes d'un procédé selon l'une quelconque des revendications précédentes.

7. Terminal mobile (4) selon la revendication 6, comprenant un contrôleur pour communiquer avec une station de base radio qui dessert une première cellule de communication, dans lequel le contrôleur est utilisable pour :
déterminer (101) au moins un paramètre de fonctionnement pour une deuxième cellule de communication ;
détecter des informations d'identificateur non unique pour la deuxième cellule de communication ;
rapporter (103) des informations de paramètre concernant le ou chaque paramètre de fonctionnement pour la deuxième cellule de communication et rapporter les informations d'identificateur non unique à la station de base radio de la première cellule de communication ;
recevoir (113) une instruction en provenance de la station de base radio de la première cellule de communication si les informations d'identificateur non unique détectées ne sont pas comprises dans un ensemble de cellules voisines de la première cellule de communication ;
détecter (115) des informations d'identificateur de cellule unique pour la deuxième cellule de communication après la réception de l'instruction ; et
rapporter (117) les informations d'identificateur de cellule unique détectées pour la deuxième cellule de communication à la station de base radio de la première cellule de communication.

8. Terminal mobile (4) selon la revendication 7, dans lequel l'au moins un paramètre de fonctionnement comprend un ou plusieurs parmi un code de brouillage, une mesure de puissance du signal, une mesure de qualité du signal et des informations de synchronisation.

9. Terminal mobile (4) selon la revendication 7, dans lequel le contrôleur est utilisable pour recevoir une liste de cellules de communication en provenance de la station de base radio de la première cellule de communication, la liste comprenant la deuxième cellule de communication et une pluralité d'autres cellules de communication.

10. Terminal mobile (4) selon l'une quelconque des revendications 7 à 9, dans lequel la deuxième cellule de communication est voisine de la première cellule de communication.

11. Terminal mobile (4) selon l'une quelconque des revendications 7 à 10, dans lequel le contrôleur est utilisable pour
détecter des informations d'identificateur de cellule non unique pour une pluralité d'autres cellules de communication ;
rapporter des informations de paramètre concernant le ou chaque paramètre de fonctionnement pour la pluralité d'autres cellules de communication et rapporter les informations d'identificateur non unique à la station de base radio de la première cellule de communication ;
recevoir une instruction en provenance de la station de base radio de la première cellule de communication si les informations d'identificateur non unique détectées ne sont pas comprises dans un ensemble de cellules voisines de la première cellule de communication ;
détecter des informations d'identificateur de cellule unique pour la pluralité d'autres cellules de communication après la réception de l'instruction ; et
rapporter les informations d'identificateur de cellule unique détectées pour la pluralité d'autres cellules de communication à la station de base radio de la première cellule de communication.

12. Procédé pour contrôler des ressources dans un système de télécommunication sans fil qui définit une pluralité de cellules de communication, le procédé comprenant :
la communication avec un terminal mobile fonctionnant dans une première cellule de communication ;
la réception (107) d'informations d'identificateur non unique et d'informations de paramètre concernant au moins un paramètre de fonctionnement pour une deuxième cellule de communication en provenance du terminal mobile ; et
la définition (109) d'une liste de cellules voisines pour le terminal mobile, la liste de cellules voisines comprenant la deuxième cellule de communication,
dans lequel le procédé comprend en outre :
la détermination (111), à partir des informations d'identificateur non unique, du fait que des informations d'identité de cellule unique sont nécessaires pour la deuxième cellule de communication ; et, si de telles informations d'identité unique sont nécessaires :
la transmission (111) d'une instruction au terminal mobile ;
la réception (119) d'informations d'identificateur de cellule unique relatives à la deuxième cellule de communication en provenance du terminal mobile ; et
la définition (121) d'une liste de cellules candidates au transfert pour le terminal mobile, la liste de cellules candidates au transfert comprenant la deuxième cellule de communication.

13. Procédé selon la revendication 12, dans lequel l'au moins un paramètre de fonctionnement comprend un ou plusieurs parmi un code de brouillage, une mesure de puissance du signal, une mesure de qualité du signal et des informations de synchronisation.

14. Procédé selon la revendication 12 ou 14, dans lequel la deuxième cellule de communication est voisine de la première cellule de communication.

15. Procédé selon l'une quelconque des revendications 12 à 14, comprenant en outre
la réception d'informations d'identificateur de cellule non unique pour une pluralité d'autres cellules de communication en provenance du terminal mobile ;
la détermination, à partir des informations d'identificateur non unique, du fait que des informations d'identité de cellule unique sont nécessaires pour la pluralité d'autres cellules de communication ; et, si de telles informations d'identité unique sont nécessaires :
la transmission d'une instruction au terminal mobile ;
la réception d'informations d'identificateur de cellule unique relatives à la pluralité d'autres cellules de communication en provenance du terminal mobile ; et
la définition d'une liste de cellules candidates au transfert pour le terminal mobile, la liste de cellules candidates au transfert comprenant la pluralité d'autres cellules de communication.

16. Réseau de télécommunication sans fil qui définit une pluralité de cellules de communication, le réseau comprenant des ressources de réseau utilisables pour :
communiquer avec un terminal mobile fonctionnant dans une première cellule de communication ;
recevoir (107) des informations d'identificateur non unique et des informations de paramètre concernant au moins un paramètre de fonctionnement pour la deuxième cellule de communication en provenance du terminal mobile ;
définir (109) une liste de cellules voisines pour le terminal mobile, la liste de cellules voisines comprenant la deuxième cellule de communication ;
déterminer (111), à partir des informations d'identificateur non unique, le fait que des informations d'identité de cellule unique sont nécessaires pour la deuxième cellule de communication ; et, si de telles informations d'identité unique sont nécessaires :
transmettre (111) une instruction au terminal mobile ;
recevoir (119) des informations d'identificateur de cellule unique relatives à la deuxième cellule de communication en provenance du terminal mobile ; et
définir (121) une liste de cellules candidates au transfert pour le terminal mobile, la liste de cellules candidates au transfert comprenant la deuxième cellule de communication.

17. Réseau selon la revendication 16, dans lequel l'au moins un paramètre de fonctionnement comprend un ou plusieurs parmi un code de brouillage, une mesure de puissance du signal, une mesure de qualité du signal et des informations de synchronisation.

18. Réseau selon la revendication 16 ou 17, dans lequel la deuxième cellule de communication est voisine de la première cellule de communication.

19. Réseau selon l'une quelconque des revendications 16 à 17, dans lequel les ressources de réseau sont utilisables pour :
recevoir des informations d'identificateur de cellule non unique pour une pluralité d'autres cellules de communication en provenance du terminal mobile ;
déterminer, à partir des informations d'identificateur non unique, le fait que des informations d'identité de cellule unique sont nécessaires pour la pluralité d'autres cellules de communication ; et, si de telles informations d'identité unique sont nécessaires :
transmettre une instruction au terminal mobile ;
recevoir des informations d'identificateur de cellule unique relatives à la pluralité d'autres cellules de communication en provenance du terminal mobile ; et
définir une liste de cellules candidates au transfert pour le terminal mobile, la liste de cellules candidates au transfert comprenant la pluralité d'autres cellules de communication.

20. Réseau selon l'une quelconque des revendications 16 à 19, dans lequel les ressources de réseau sont fournies par une station de base radio.

21. Réseau de télécommunication sans fil selon l'une quelconque des revendications 16 à 20, comprenant en outre un terminal mobile selon l'une quelconque des revendications 12 à 15.
